# FASCICULE DE BREVET EUROPEEN

(11) **EP 1 565 661 B1**
(45) Date de publication et mention de la délivrance du brevet: **15.04.2009**
(21) Numéro de dépôt: 03786009.5
(22) Date de dépôt: 17.11.2003
(51) Int. Cl.: F16B 13/06, E06B 3/54, E04F 13/14, E04F 13/08, F16B 13/12

(54) **INSERTS SOUS FORME DE DOUILLE FILETEE DESTINES A EQUIPER DES PLAQUES, NOTAMMENT EN VERRE, EN VUE DE LEUR FIXATION ET LES PLAQUES AINSI EQUIPEES.**
GEWINDEEINSETZBUCHSE ZUR AUSSTATTUNG VON PLATTEN, INSBESONDERE AUS GLAS, ZWECKS IHRER BEFESTIGUNG UND ENTSPRECHEND AUSGESTATTETE PLATTEN.
INSERT IN THE FORM OF A THREADED BUSHING, WHICH IS DESIGNED TO EQUIP AND FIX PLATES, FOR EXAMPLE, GLASS PLATES, AND PLATES THUS EQUIPPED

(30) Priorité: 18.11.2002 FR 0214517
(43) Date de publication de la demande: 24.08.2005
(73) Titulaire: SAINT-GOBAIN GLASS FRANCE, 92400 Courbevoie (FR)
(72) Inventeur: LEBOT, Pierre, 31500 Toulouse (FR); NUGUE, Jean-Clément, 60260 Lamorlaye (FR); MENNECHEZ, Françoise, 02400 Chateau Thierry (FR)
(74) Mandataire: Jamet, Vincent
(86) Numéro de dépôt international: PCT/FR2003/003402
(87) Numéro de publication internationale: WO 2004/046567

(56) Documents cités:
- EP-A- 0 340 089
- EP-A- 0 931 942
- WO-A-01/09459
- US-A- 5 718 547
- US-A1- 2002 020 119

## Description

La présente invention concerne des plaques, notamment en matériau fragile du type verre, équipées pour être fixées sur des supports par l'intermédiaire d'éléments de liaison.

De telles plaques sont destinées notamment à équiper des appareils de chauffage tels que radiateurs, convecteurs, etc., sans toutefois que la présente invention ne soit limitée à une telle application. On peut ainsi mentionner la fixation de plaques de double vitrage ou de verre feuilleté, également la réalisation de parois ou de mobiliers constitués de substrats verriers.

Ces plaques doivent donc comporter des trous aux points de fixation. Elles peuvent être renforcées, notamment à l'aide d'une trempe thermique ou chimique, pour obtenir la résistance mécanique (et le cas échéant thermique) requise. Les trous doivent alors être effectués avant le traitement thermique.

Par la demande internationale PCT WO-A1-01/09459, on connaît un élément de fixation pour plaques de double vitrage, ledit élément consistant en un boulon fileté présentant à son extrémité avant un cône d'expansion sur lequel on vient faire glisser un élément d'expansion en forme d'anneau en vue de l'expansion dans un trou de la plaque de verre arrière, ledit trou étant en contre-dépouille dans la région de son fond.

Un tel dispositif présente l'inconvénient que, lors du traitement thermique des plaques de verre dotées des trous ayant de telles contre-dépouilles, des fortes contraintes se créent dans la région du congé de raccordement entre le fond de ces trous et la paroi latérale tronconique débouchant dans la surface de la plaque de verre et s'évasant en direction du fond des trous. Ces fortes contraintes peuvent conduire à des plaques défectueuses qu'il faut mettre au rebut après le traitement thermique ou dans lesquelles, lors du montage ou ultérieurement à l'usage, se développent des défauts tels que des fissurations.

Un autre inconvénient de ce montage connu est qu'une fois la plaque montée, elle ne peut être démontée que très difficilement, avec un risque important de détérioration, voire de casse.

La présente invention remédie à ces inconvénients et propose un système de fixation comportant des inserts destinés à recevoir des éléments de fixation proprement dits, lesdits inserts étant agencés pour être reçus ou formés in situ dans des trous dont la paroi latérale est de profil courbe et de rétention et non plus tronconique. Ainsi, à même volume de cavité que dans l'état antérieur de la technique précité, la surface de contact ou portée de l'organe de montage que constitue l'insert sera plus grande, ce qui permet de mieux répartir les efforts.

A cet effet, la présente invention à pour objet un insert destiné à coopérer dans une plaque, notamment en matériau fragile du type verre, afin de permettre, en coopération avec un élément de liaison, le montage de ladite plaque avec un support, caractérisé par le fait qu'il est agencé pour être reçu ou être formé in situ dans un trou à parois de profil courbe et de rétention, ledit trou étant pratiqué au niveau d'une face de la plaque.

Dans des modes de réalisation préférés de l'invention, on peut éventuellement avoir recours en outre à l'une et/ou à l'autre des dispositions suivantes :
- le trou est délimité par une paroi latérale à profil concave, de concavité tournée vers l'intérieur ;
- le trou est borgne ou débouchant ;
- le trou présente une section droite circulaire ou oblongue ;
- l'insert est venu à partir d'au moins une pièce constituée dans un matériau déformable ;
- l'insert est démontable ;
- l'insert consiste en un élément en forme de coupelle, destiné à être introduit dans le trou correspondant de la plaque, ladite coupelle comportant des entailles radiales pratiquées dans sa paroi latérale pour constituer ainsi des pétales susceptibles de fléchir élastiquement, voire plastiquement, vers l'intérieur afin de permettre la mise en place dudit élément dans le trou correspondant de la plaque, la surface interne de la paroi latérale de l'élément en coupelle étant agencée pour coopérer avec l'élément de liaison avec le support ;
- l'élément en coupelle est de forme circulaire ;
- l'élément en coupelle comporte de trois à cinq entailles ;
- l'élément est à fond incurvé, éventuellement percé ;
- la coopération entre l'élément de liaison et l'insert est adaptée de manière à assurer l'autoblocage dudit l'insert au sein du trou ;
- on interpose à l'interface entre la paroi latérale du trou et l'insert un agent mouillant pour l'amélioration de l'aspect de surface.

La présente invention porte également sur une plaque telle que définie dans la revendication 11.

Comme indiqué ci-dessus, le matériau fragile constituant ces plaques est d'une manière générale du verre trempé, ou plus généralement un substrat verrier qui est susceptible de subir un traitement thermique, notamment une trempe, un durcissement, un recuit, ou bien un verre renforcé mécaniquement, après la réalisation des trous.

La présente invention porte aussi sur un ensemble monté ou à monter comportant au moins une plaque en matériau fragile du type verre telle que définie ci-dessus.

En particulier, un tel ensemble est un appareil de chauffage comportant une plaque de verre telle que définie ci-dessus, ladite plaque pouvant être dotée d'éléments conducteurs, par exemple sérigraphiés, et d'organes d'amenée du courant.

Enfin la présente invention porte sur un procédé de fabrication d'une plaque adaptée pour être montée sur un support afin de constituer un ensemble monté tel qu'un appareil de chauffage, caractérisé par le fait qu'on usine dans la surface de la plaque, notamment en matériau fragile du type verre n'ayant pas subi de traitement thermique au moins un trou à l'emplacement des points de fixation, chaque trou précité étant conformé pour permettre l'introduction et le maintien d'un insert tel que précédemment défini, qu'on réalise ensuite un traitement thermique de ladite plaque, et qu'on vient disposer ou former in situ dans chacun des trous un insert de forme complémentaire tel que précédemment défini.

Pour mieux illustrer l'objet de la présente invention, on va en décrire ci-après, à titre indicatif et non limitatif, un mode de réalisation particulier avec référence au dessin annexé, sur lequel :
- la Figure 1 est une vue partielle en perspective d'une plaque de verre trempé dans laquelle ont été mis en place des dispositifs de fixation de ladite plaque sur un support, l'un seulement de ces dispositifs apparaissant sur la Figure 1 ;
- la Figure 2 est une vue éclatée en coupe transversale à travers la plaque de verre trempé de la Figure 1 dans un plan diamétral du dispositif de fixation représenté sur cette figure ; et
- la Figure 3 est, à plus grande échelle, une vue en perspective de l'insert du dispositif de fixation représenté sur les Figures 1 et 2,
- La Figure 4 est une vue en perspective d'un meuble dont le montage est assuré à l'aide de dispositifs de fixation objet de l'invention,
- La Figure 5 est une vue en perspective d'une cloison ou d'une paroi pourvue d'une charnière dont le montage est assuré sur la paroi à l'aide d'un dispositif de fixation objet de l'invention.

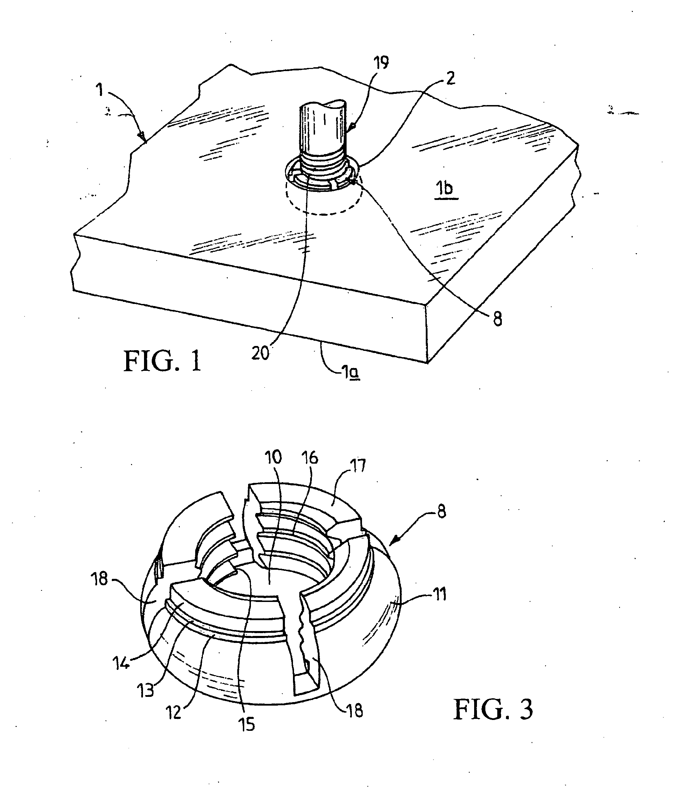

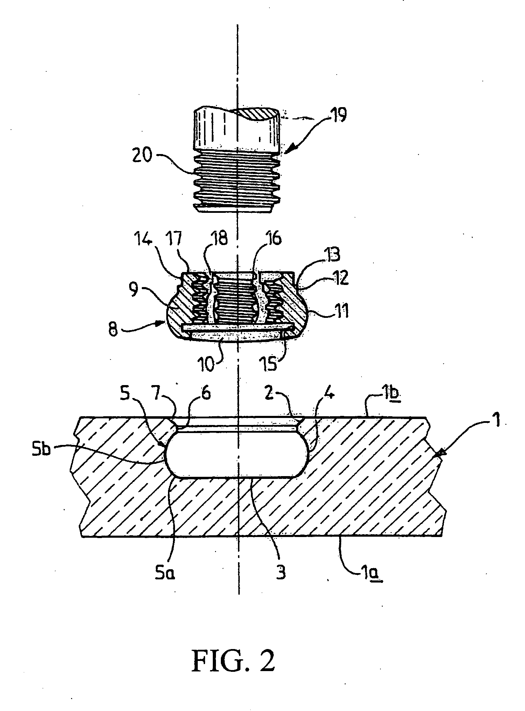

Si l'on se réfère tout d'abord aux Figures 1 et 2, on peut voir que l'on a représenté par 1 une plaque de verre trempé qui est destinée par exemple à constituer la plaque extérieure d'un appareil de chauffage tel qu'un convecteur mural, une plinthe chauffante, un bandeau chauffant ou un panneau radiant.

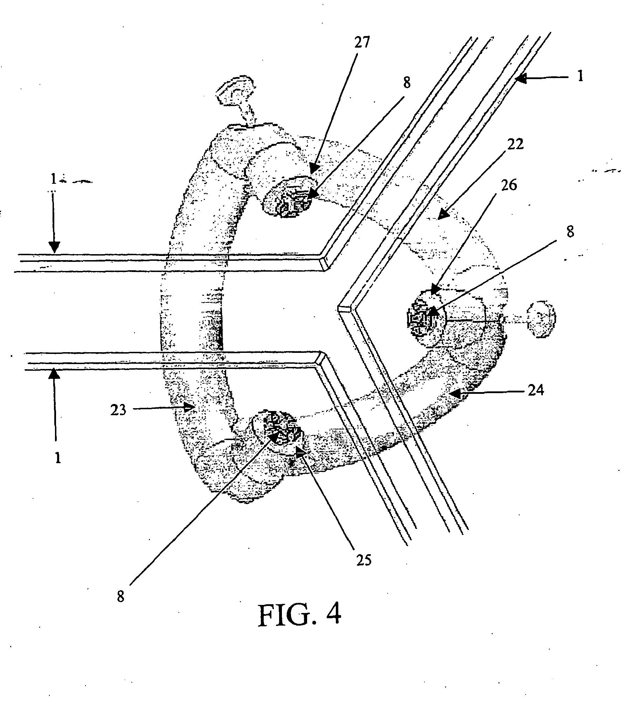

Selon d'autres variantes, dont un exemple spécifique au mobilier est représenté en figure 4, cette plaque, notamment en matériau fragile du type verre, pourrait constituer un élément de façade, un aménagement d'intérieur, une paroi ou une cloison, un mobilier, ou toutes autres parois. Des éléments de liaison 22, 23, 24 (charnière, entretoise, jonction ou similaire, support d'accessoires...), visibles en figure 4 comportent au niveau de l'une de leur extrémité libre 24, 25, 26, au moins un insert 8 selon l'invention adapté pour se monter au sein d'un orifice pratiqué dans ladite plaque, l'immobilisation de l'ensemble assurant le montage du meuble étant obtenue grâce au éléments de liaison 22, 23, 24 et aux inserts 8 reliant les pièces entre-elles. Bien entendu, ces pièces de liaison peuvent être montées à l'intérieur et/ou à l'extérieur du meuble.

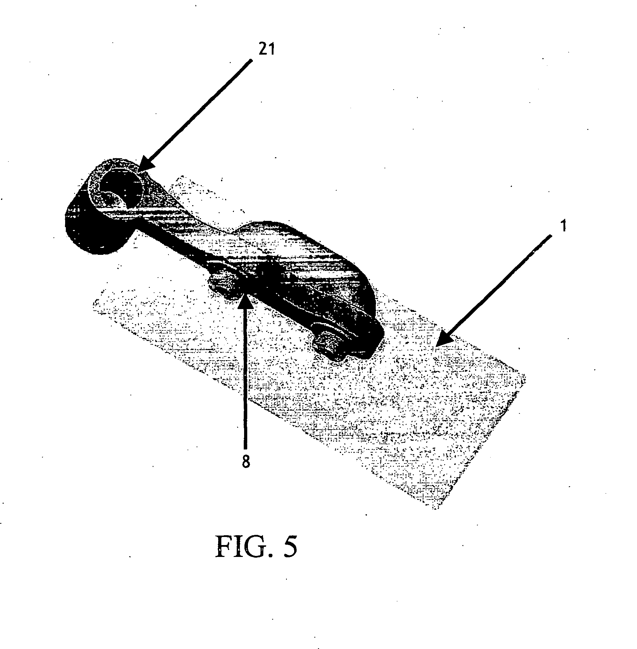

Selon encore un exemple de réalisation représenté en figure 5, l'insert 8 objet de l'invention permet le montage d'une charnière 21 sur un support 1 (porte, cloison ou similaire).

Suivant le cas, la plaque en verre trempé - qui est donc thermiquement et mécaniquement résistante - serait :
- une plaque de chauffe, par exemple une plaque recouverte d'une couche transparente électroconductrice qui fait office de résistance dans laquelle l'électricité qui la traverse se transforme en chaleur par effet Joule, des fines bandes conductrices disposées le long des bordures verticales et/ou horizontales constituant des bus d'amenée du courant à ladite couche électroconductrice ; cette dernière est par exemple une couche à basse émissivité et réfléchissant l'infrarouge, telle qu'une couche d'étain dopé à l'antimoine ou au fluor, ou d'oxyde d'indium dopé à l'étain, déposée sous une épaisseur de quelques centaines de nanomètres ; ou
- une plaque comportant une couche réfléchissant le rayonnement infrarouge, ladite couche étant du type de celles précitées à basse émissivité ou une touche métallique fine ; ou encore
- une plaque protectrice.

Il est souhaité que cette plaque extérieure comporte des dispositifs de fixation qui soient portés par sa face tournée vers l'intérieur dans la position montée de l'appareil, lesdits dispositifs de fixation se trouvant donc ainsi cachés à la vue.

La plaque 1, de forme rectangulaire (ou carrée) représentée sur le dessin comporte une face 1a qui sera la face présentée à la vue dans l'assemblage final. Dans les régions des coins de la face 1b opposée à la face 1a, sont pratiqués des trous borgnes 2, identiques, dont l'un seulement peut être vu sur la Figure 2. Bien entendu, en fonction des applications visées, les trous peuvent être déboùchants, circulaires, oblongs.

Chacun de ces trous 2 est délimité par un fond circulaire plat 3 parallèle aux faces 1a, 1b de la plaque de verre 1, et par une paroi latérale 4 raccordée au fond 3 par une région de profil courbe 5 et de rétention, notamment concave, de concavité tournée vers l'intérieur du trou 2 et présentant une symétrie axiale, puis une courte région cylindrique 6, pour déboucher à la surface 1b par une région tronconique 7 s'évasant vers l'extérieur. La région 6 constitue ainsi, avec les parties voisines des régions 5 et 7, un bourrelet d'accrochage ou de rétention dont le rôle est indiqué plus loin.

La profondeur des trous 2, au niveau des fonds 3, correspond par exemple au plus à la moitié de l'épaisseur de la plaque 1.

La région concave 5 comporte en fait une première partie 5a ayant un premier rayon de courbure R₁ et constituant l'amorce de la concavité au voisinage du fond 3, et une seconde partie 5b raccordant la partie 5a et la région cylindrique 6, et ayant un second rayon de courbure R₂ de dimension inférieure au premier.

Dans l'exemple représenté, le fond 3 d'un trou 2 présente un diamètre de 7,6 mm ; sa hauteur est de 1,5 mm et les rayons de courbure R₁ et R₂ sont de respectivement 12 mm et 2 mm. Afin de favoriser l'usinage du trou, surtout au niveau du fond du trou, on prévoit que la paroi de fond présente un rayon de courbure R3 de quelques dixièmes de millimètre.

Dans chacun des trous 2 est introduit un insert 8 venu de moulage dans une matière plastique telle que du PVDF par exemple (polyfluorure de vinylidène), ou dans une matière métallique (aluminium par exemple). En variante, cet insert peut être moulé in situ. Comme on peut mieux le voir sur la Figure 3, chaque insert 8 comporte une paroi périphérique 9 raccordée à un fond incurvé 10. Cet insert est soit monobloc, soit composé de plusieurs éléments. Il est déformable élastiquement, voire plastiquement de manière à permettre son introduction dans le trou.

La face externe de la paroi 9 est raccordée au fond 10 par une région cintrée 11 dont la forme lui permet de venir épouser celle de la région concave 5 du trou 2. La région cintrée 11 se prolonge par une paroi cylindrique 12 de faible hauteur, qui est destinée à venir en appui contre la région cylindrique 6 délimitant le trou 2, pour se terminer, après un décrochement 13 vers l'intérieur, par une autre région cylindrique 14.

La face interne de la paroi 9 comporte, au voisinage du fond 10, une échancrure périphérique en 15, le reste de la face interne de ladite paroi 9 comportant un taraudage 16.

Par ailleurs, la paroi 9 comporte, à partir de sa bordure supérieure plate 17 - laquelle est destinée à venir en position de montage, dans le plan de la face 1b de la plaque 1, quatre entailles radiales 18 régulièrement espacées et relativement profondes, s'étendant jusqu'au voisinage du fond 10, qui peut être éventuellement percé.

Par ces entailles 18, la paroi latérale 9 se trouve ainsi divisée en quatre « pétales », lesquels, en combinaison avec l'échancrure en 15, donnent à l'insert 8 une flexibilité, les « pétales » pouvant ainsi fléchir vers l'intérieur pour permettre l'introduction par déformation élastique, voire plastique, de l'insert 8 dans un trou 2 ; une fois l'insert 8 introduit, les pétales reviennent à leur position initiale, épousant les régions 5 et 6 délimitant le trou 2. L'accrochage de l'insert 8 sous le bourrelet précité est ainsi réalisé. Un espacement est cependant formé dans cette position entre les parois 7 et 14, facilitant le retrait de l'insert 8 en cas de besoin.

En fonction des applications, et notamment dans celle visée dans cet exemple, il peut être important de rendre invisible de la face en regard de l'utilisateur, le trou et son insert. A cette fin, on interpose à l'interface entre la paroi latérale interne du trou et la paroi externe du trou un agent mouillant pour l'amélioration de l'aspect de surface, tel que par exemple du silicone, ou un agent lubrifiant possédant cette propriété.

Une fois en place, l'insert 8 reçoit un élément de liaison 19 de la plaque 1 sur son support. Cet élément de liaison 19 permet d'assurer l'autoblocage de l'insert. On peut voir sur le dessin uniquement la partie de l'élément de liaison 19 qui coopère avec l'insert 8 et qui est constituée par une tige dont la région d'extrémité 20 comporte un filetage 20 permettant de fixer l'élément 19 à la plaque 1 par vissage. L'extrémité opposée de la tige 20 (qui n'est donc pas représentée) est agencée pour permettre la liaison sur le support choisi.

En variante, l'élément de liaison peut être constitué de toute chaîne cinématique permettant de relier une plaque en matériau fragile à un support. Ainsi, cette chaîne cinématique peut comporter une rotule, éventuellement prolongée par une tige, une articulation, une boîte...

Les plaques de verre ayant subi un traitement thermique ou chimique 1 (par exemple une trempe) sont préparées de la façon suivante : on commence par découper les plaques 1 dans du verre non trempé ; on usine les trous 2 aux emplacements prévus - d'une manière générale au moins deux, et de préférence trois ou quatre trous 2 pratiqués dans chaque coin de la plaque 1 par exemple dans le cas de l'application aux appareils de chauffage - et on effectue ensuite le traitement thermique ou chimique (en l'occurrence dans cet exemple une trempe) des plaques 1. La région concave 5 des parois latérales délimitant les trous 2 permet de répartir les contraintes qui se développent au sein du verre lors de la trempe. En particulier, le profil de cette région concave comportant la partie 5a précitée de plus grand rayon de courbure permet d'assurer que la trempe ait lieu sans provoquer de rupture du verre dans cette région, évitant d'avoir à mettre des plaques 1 au rebut.

Ensuite, on vient introduire les inserts 8 dans les trous respectifs 2. (En variante, les inserts 8 peuvent être moulés in situ) Comme on l'a déjà indiqué, cette mise en place des inserts 8 est très aisée du fait de l'élasticité, voire de la plasticité de ceux-ci. Les plaques 1 peuvent être livrées alors qu'elles sont déjà équipées de leurs inserts 8, lesquels ne dépassent pas de la surface des plaques 1.

Puis, on met en place les éléments de liaison 19. Cette mise en place s'effectue par vissage dans l'exemple représenté.

Un certain jeu est ménagé entre un trou 2 et l'insert 8 reçu dans celui-ci. Ceci permet d'une part une adaptation plus aisée au montage des éléments de liaison et d'autre part une plus grande facilité à encaisser les efforts mécaniques s'exerçant sur la plaque 1 une.fois montée, de tels efforts pouvant être accrus dans le cas où la plaque 1 serait une plaque faisant partie d'un appareil de chauffage et amenée de ce fait à subir une dilatation lors du chauffage.

L'invention telle que précédemment décrite offre de multiples avantages :
- la liaison entre le support et la plaque requiert un nombre réduit de pièces,
- cette liaison est relativement peu sensible aux tolérances de fabrications,
- cette liaison est démontable et permet de supporter des efforts mécaniques relativement élevés.

## Revendications

1. - Insert (8) destiné à coopérer dans une plaque (1), notamment en matériau fragile du type verre, afin de permettre, en coopération avec un élément de liaison (19), le montage de ladite plaque (1) avec un support, **caractérisé par le fait qu'**il est agencé d'une part, pour être reçu ou être formé in situ dans un trou (2) à parois de profil courbe et de rétention et d'autre part pour s'autobloquer dans ledit trou (2), ledit trou étant pratiqué au niveau d'une face de la plaque (1), ledit insert (8) étant venu à partir d'au moins une pièce démontable constituée dans un matériau déformable.

2. - Insert selon la revendication 1, **caractérisé en ce que** le trou (2) est délimité par une paroi latérale à profil concave (5), de concavité tournée vers l'intérieur.

3. - Insert selon l'une des revendications 1 ou 2, **caractérisé en ce que** le trou (2) est borgne ou débouchant.

4. - Insert selon l'une quelconque des revendications précédentes, **caractérisé en ce que** le trou (2) présente une section droite circulaire ou oblongue.

5. - Insert selon l'une quelconque des revendications 1 à 4, **caractérisé en qu'**il consiste en un élément en forme de coupelle, destiné à être introduit dans le trou correspondant (2) de la plaque (1), ladite coupelle comportant des entailles radiales (18) pratiquées dans sa paroi latérale pour constituer ainsi des pétales susceptibles de fléchir élastiquement, voire plastiquement vers l'intérieur afin de permettre la mise en place dudit élément dans le trou correspondant (2) de la plaque (1), la surface interne de la paroi latérale de l'élément en coupelle étant agencée pour coopérer avec l'élément de liaison (19) de la plaque de verre (1) sur le support.

6. - Insert selon la revendication 5, **caractérisé par le fait que** l'élément en coupelle est de forme circulaire.

7. - Insert selon l'une des revendications 5 et 6, **caractérisé par le fait que** l'élément en coupelle comporte de trois à cinq entailles (18).

8. - Insert selon l'une des revendications 3 à 7, **caractérisé par le fait que** l'élément est à fond incurvé, éventuellement percé.

9. - Insert selon l'une des revendications 1 à 8, **caractérisé par le fait que** la coopération entre l'élément de liaison (19) et l'insert (8) est adaptée de manière à assurer l'autoblocage dudit l'insert (8) au sein du trou (2).

10. - Insert selon l'une des revendications 1 à 9, **caractérisé en ce qu'**on interpose à l'interface entre la paroi latérale (5) du trou (2) et l'insert (8) un agent mouillant pour l'amélioration de l'aspect de surface.

11. - Plaque, notamment en matériau fragile du type verre, comportant sur au moins une de ses surfaces un trou (2) qui est délimité par une paroi latérale à profil concave (5), de concavité tournée vers l'intérieur, ce trou étant équipé d'au moins un insert (8) tel que défini à l'une des revendications 1 à 10.

12. - Plaque de verre selon la revendication 11, dont le ou chaque insert (8) a reçu un élément de liaison (19) adapté pour coopérer avec un support.

13. - Plaque selon l'une des revendications 11 à 12, **caractérisée par le fait que** le verre est du verre trempé, durci, recuit, renforcé mécaniquement.

14. - Ensemble monté ou à monter comportant au moins une plaque (1) telle que définie à l'une des revendications 11 à 13.

15. - Ensemble selon la revendication 14, **caractérisé en ce qu'**il consiste en un élément de façade, un aménagement d'intérieur, une cloison, un mobilier.

16. - Appareil de chauffage comportant une plaque (1) telle que définie à l'une des revendications 11 à 13, ladite plaque (1) pouvant être dotée d'éléments conducteurs par exemple sérigraphiés et d'organes d'amenée du courant.

17. - Procédé de fabrication d'une plaque (1) adaptée pour être montée sur un support afin de constituer un ensemble monté tel qu'un appareil de chauffage, **caractérisé par le fait qu'**on usine dans la surface de la plaque, notamment en matériau fragile du type verre (1) n'ayant pas subi de traitement thermique au moins un trou (2) à l'emplacement des points de fixation, chaque trou précité (2) étant conformé pour permettre l'introduction et le maintien d'un insert (8) tel que défini à l'une des revendications 1 à 10, qu'on réalise ensuite un traitement thermique de ladite plaque (1), et qu'on vient disposer ou former in situ dans chacun des trous (2) un insert (8) de forme complémentaire tel que défini à l'une des revendications 1 à 10.

## Claims

1. Insert (8) intended to cooperate in a plate (1), especially made of a brittle material of the glass type, so as to allow, in cooperation with a connecting element (19), said plate (1) to be mounted on a support, **characterized in that** it is designed, on the one hand, to be received or formed *in situ* in a hole (2) having walls of curved retaining profile, and, on the other hand, to be self-locked in the said hole (2), said hole being made in one face of the plate (1), said insert (8) being obtained from at least one removable component made of a deformable material.

2. Insert according to Claim 1, **characterized in that** the hole (2) is bounded by a side wall (5) of concave profile, the concavity being turned toward the inside.

3. Insert according to either of Claims 1 and 2, **characterized in that** the hole (2) is a blind hole or a through-hole.

4. Insert according to any one of the preceding claims, **characterized in that** the hole (2) has a circular or oblong cross section.

5. Insert according to any one of Claims 1 to 4, **characterized in that** it consists of a cup-shaped element intended to be introduced into the corresponding hole (2) in the plate (1), said cup having radial slots (18) made in its side wall, thus forming petals that can bend elastically, or even plastically, inward so as to allow said element to be fitted into the corresponding hole (2) in the plate (1), the internal surface of the side wall of the cuplike element being designed to cooporate with the connecting element (19) for connecting the glass plate (1) to the support.

6. Insert according to Claim 5, **characterized in that** the cuplike element is of circular shape.

7. Insert according to either of Claims 5 and 6, **characterized in that** the cuplike element has three to five slots (18).

8. Insert according to one of Claims 3 to 7, **characterized in that** the element has a curved, optionally pierced, bottom.

9. Insert according to one of Claims 1 to 8,
**characterized in that** the cooperation between the connecting element (19) and the insert (8) is suitable for self-locking said insert (8) within the hole (2).

10. Insert according to one of Claims 1 to 9, **characterized in that** a wetting agent for improving the surface appearance is interposed at the interface between the side wall (5) of the hole (2) and the insert (8).

11. Plate, especially made of a brittle material of the glass type, having on at least one of its surfaces a hole (2) which is bounded by a side wall having a concave profile (5), having a concavity turned inwards, said hole being equipped with at least one insert (8) as defined in one of claims 1 to 10.

12. Glass plate according to Claim 11, the or each insert (8) of which has received a connecting element (19) suitable for cooperating with a support.

13. Plate according to either of Claims 11 and 12, **characterized in that** the glass is toughened, tempered, annealed or mechanically reinforced glass.

14. Mounted assembly or assembly to be mounted, comprising at least one plate (1) as defined in one of Claims 11 to 13.

15. Assembly according to Claim 14, **characterized in that** it consists of a wall cladding element, an interior furnishing, a partition or piece of furniture.

16. Heating means comprising a plate (1) as defined in one of Claims 11 to 13, it being possible for said plate (1) to be provided with conducting elements, for example screen-printed elements, and with current leads.

17. Process for manufacturing a plate (1) suitable for being mounted on a support so as to constitute a mounted assembly, such as a heating means, **characterized in that** the surface of the plate, especially one made of a brittle material of the glass type (1) that has not undergone a heat treatment, is machined so as to make at least one hole (2) at the place of the fastening points, each forementioned hole (2) being shaped so as to allow an insert (8) as defined in one of Claims 1 to 10 to be introduced and retained, **in that** a heat treatment is then carried out on said plate (1), and **in that** an insert (8) of complementary shape as defined in one of Claims 1 to 10 is placed or formed in situ in each of the holes (2).

## Patentansprüche

1. Einsatz (8), welcher dazu bestimmt ist, in einer Platte (1), insbesondere aus zerbrechlichem glasartigem Material mitzuwirken, um in Zusammenwirken mit einem Verbindungselement (19) das Zusammenbauen der genannten Platte (1) mit einem Träger zu ermöglichen, **dadurch gekennzeichnet, dass** er einerseits vorgesehen ist, um in einem Loch (2) mit Wänden mit gekrümmtem Profil und zum Festhalten aufgenommen oder in situ ausgebildet zu werden, und andererseits, um sich in dem Loch (2) selbsttätig festzulegen, wobei das Loch im Bereich einer Seite der Platte (1) ausgebildet ist, wobei der Einsatz (8) aus wenigstens einem abnehmbaren, aus einem verformbaren Material bestehenden Teil gefertigt ist.

2. Einsatz nach Anspruch 1, **dadurch gekennzeichnet, dass** das Loch (2) durch eine Seitenwand mit konkavem Profil (5), dessen Konkavität nach innen weist, begrenzt ist.

3. Einsatz nach einem der Ansprüche 1 oder 2, **dadurch gekennzeichnet, dass** das Loch (2) ein Sackloch oder ein Durchgangsloch ist.

4. Einsatz nach einem der vorhergehenden Ansprüche, **dadurch gekennzeichnet, dass** das Loch (2) einen kreisförmigen oder länglichen Querschnitt aufweist.

5. Einsatz nach einem der Ansprüche 1 bis 4, **dadurch gekennzeichnet, dass** er aus einem schalenförmigen Element besteht, das dazu bestimmt ist, in das entsprechende Loch (2) der Platte (1) eingeführt zu werden, wobei die Schale radiale Einschnitte (18) aufweist, die in ihrer Seitenwand ausgebildet sind, um so "Blätter" zu bilden, die geeignet sind, elastisch, sogar plastisch zur Innenseite nachzugeben, um das Einsetzen des Elements in das entsprechende Loch (2) der Platte (1) zu ermöglichen, wobei die Innenseite der Seitenwand des schalenförmigen Elements vorgesehen ist, um mit dem Element (19) zum Befestigen der Glasplatte (1) an dem Träger zusammenzuwirken.

6. Einsatz nach Anspruch 5, **dadurch gekennzeichnet, dass** das schalenförmige Element kreisförmig ausgebildet ist.

7. Einsatz nach einem der Ansprüche 5 und 6, **dadurch gekennzeichnet, dass** das schalenförmige Element drei bis fünf Einschnitte (18) aufweist.

8. Einsatz nach einem der Ansprüche 3 bis 7, **dadurch gekennzeichnet, dass** das Element einen gewölbten, eventuell durchbohrten Boden aufweist.

9. Einsatz nach einem der Ansprüche 1 bis 8, **dadurch gekennzeichnet, dass** das Zusammenwirken zwischen dem Verbindungselement (19) und dem Einsatz (8) geeignet ist, die Selbsthemmung des Einsatzes (8) innerhalb des Lochs (2) sicherzustellen.

10. Einsatz nach einem der Ansprüche 1 bis 9, **dadurch gekennzeichnet, dass** an der Grenzfläche zwischen der Seitenwand (5) des Lochs (2) und dem Einsatz (8) ein Netzmittel eingebracht wird, um das Aussehen der Oberfläche zu verbessern.

11. Platte, insbesondere aus zerbrechlichem glasartigem Material, die an wenigstens einer ihrer Flächen ein Loch (2) aufweist, das durch eine Seitenwand mit konkavem Profil (5), dessen Konkavität nach innen weist, begrenzt ist, wobei dieses Loch mit wenigstens einem Einsatz (8) ausgestattet ist, wie er in einem der Ansprüche 1 bis 10 definiert ist.

12. Glasplatte nach Anspruch 11, deren Einsatz oder von welcher jeder Einsatz (8) ein Verbindungselement (19) aufgenommen hat, welches geeignet ist, mit einem Träger zusammenzuwirken.

13. Platte nach einem der Ansprüche 11 bis 12, **dadurch gekennzeichnet, dass** das Glas vorgespanntes, gering gehärtetes, geglühtes, mechanisch verstärktes Glas ist.

14. Montierte oder zu montierende Einheit, die wenigstens eine Platte (1) umfasst, wie sie in einem der Ansprüche 11 bis 13 definiert ist.

15. Einheit nach Anspruch 14, **dadurch gekennzeichnet, dass** sie aus einem Fassadenelement, einer Inneneinrichtung, einer Zwischenwand, einem Mobiliar besteht.

16. Heizgerät, das eine Platte (1) umfasst, wie sie in einem der Ansprüche 11 bis 13 definiert ist, wobei die Platte (1) mit leitenden Elementen, beispielsweise durch Siebdruckverfahren hergestellten, sowie mit Stromzuführungsorganen ausgestattet sein kann.

17. Verfahren zur Herstellung einer Platte (1), die geeignet ist, an einem Träger angebracht zu werden, um eine montierte Einheit, wie zum Beispiel ein Heizgerät zu bilden, **dadurch gekennzeichnet, dass** in der Oberfläche der Platte, insbesondere aus zerbrechlichem glasartigem Material (1), die keiner Wärmebehandlung unterzogen wurde, an der Stelle der Befestigungspunkte wenigstens ein Loch (2) ausgearbeitet wird, wobei jedes vorgenannte Loch (2) entsprechend ausgebildet ist, um das Einführen und das Halten eines Einsatzes (8), wie er in einem der Ansprüche 1 bis 10 definiert ist, zu ermöglichen, dass anschließend eine Wärmebehandlung der Platte (1) durchgeführt wird und dass in jedem der Löcher (2) ein Einsatz (8) ergänzender Form, wie er in einem der Ansprüche 1 bis 10 definiert ist, angeordnet oder in situ ausgebildet wird.
